# EUROPEAN PATENT APPLICATION

(11) **EP 2 327 991 A1**
(43) Date of publication of application: **01.06.2011**
(21) Application number: 09252684.7
(22) Date of filing: 26.11.2009
(51) Int. Cl.: G01P 13/02, B64F 1/18, G09F 13/22

(54) **Windsock assembly**

(71) Applicant: Automatic Power Inc., Houston, TX 77223-0738 (US)
(72) Inventor: Trojanowski, Alan, Dayton Texas 77535 (US)
(74) Representative: Hartley, Andrew Philip

(57) **Abstract**

A windsock assembly comprises a windsock (14) having alternating white (34,36,38) and orange bands (40,42). A light source (18) is provided for directing light into the interior of the windsock (14) and onto an interior surface (44) of the windsock (14). The light source (18) has both white light emitting LEDs (60) and red/orange light emitting LEDs (58). The red/orange light emitted by the red/orange LEDs (58) has a greater percentage transmission over the orange bands (40,42) as compared to the white light. This allows a reduced power consumption, to achieve satisfactory illumination of the orange bands (40,42), as compared to the use of white light emitting LEDs alone.

## Description

The invention relates to a windsock assembly.

A known windsock assembly comprises a windsock and a light source consisting of a plurality of light emitting diodes (LEDs). The windsock has alternating bands of white and orange colour arranged along its length. The light source is located at one of the ends of the windsock so as to direct light onto the interior surface of the windsock. The LEDs emit white light which is transmitted across both the white and orange bands of the windsock to the exterior surface of the windsock. In this way the windsock is illuminated and is visible in conditions of low ambient light.

In accordance with the invention, there is provided a windsock assembly comprising: a windsock having first and second portions, the first portion having a first colour and the second portion having a second non-white colour that is different from the first colour, the windsock having interior and exterior surfaces, each said surface extending over the first and second portions; and illumination means for directing light onto the interior surface, light from the illumination means being transmitted by the first and second portions to the exterior surface, the illumination means comprising a least one first LED and the first portion transmitting light emitted by the or each first LED to the exterior surface; characterised in that the illumination means comprises at least one second LED that emits non-white light of a different colour to the light of the or each first LED, the percentage transmission of the non-white light from the or each second LED through the second portion being greater than the percentage transmission through the second portion of the light emitted by the or each first LED.

The following is a more detailed description of embodiments of the invention, by way of example, reference being made to the appended schematic drawings in which:
Figure 1 is a perspective view from above of a windsock assembly;
Figure 2 is a cross-sectional view of part of the windsock assembly of Figure 1;
Figure 3 is a perspective view of a light source from the windsock assembly of Figures 1 and 2; and
Figure 4 is an elevational view of the light source of Figure 3.

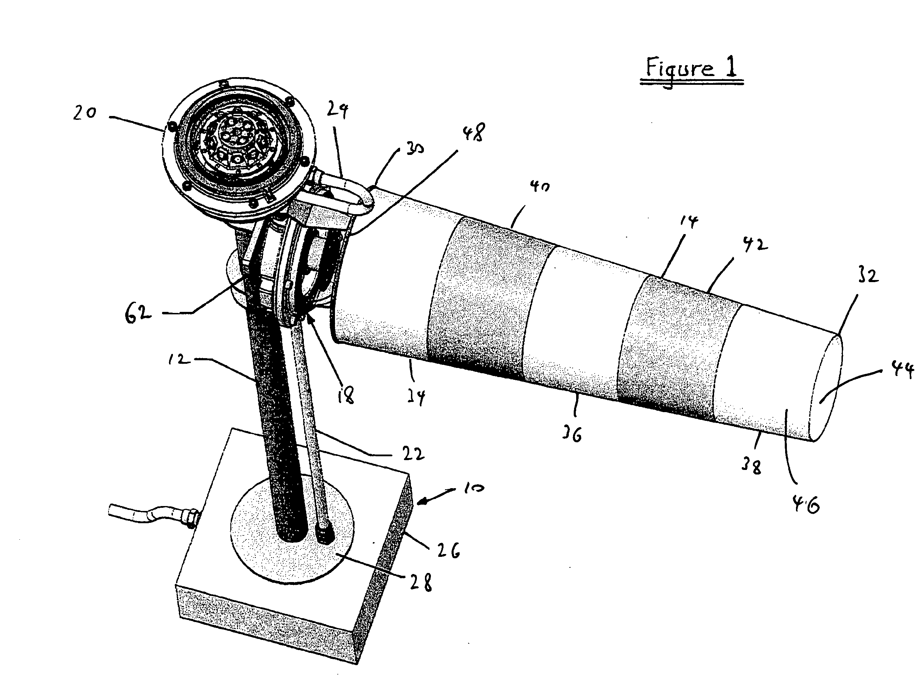

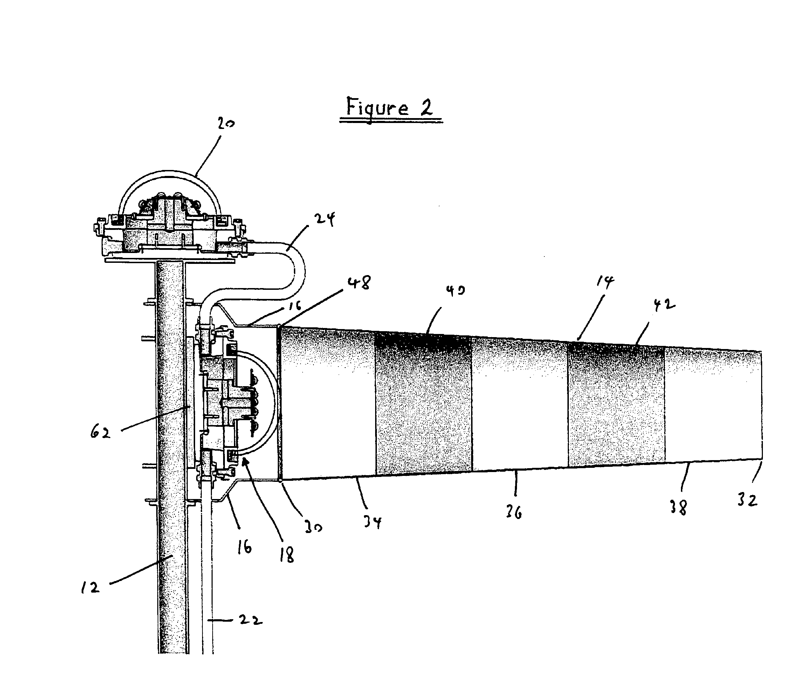

As seen in Figures 1 and 2, the windsock assembly comprises a base unit 10, a support pole 12, a windsock 14, a connector 16 for connecting the windsock 14 to the support pole 12, and a first light source 18. In addition, the windsock assembly comprises a second light source 20, a first power cable 22 for supplying electrical power from the base unit 10 to the first light source 18 and a second power cable 24 for supplying electrical power to the second light source 20.

The base unit 10 comprises a slip ring base 26 which remains static and a rotary element 28 which is able to rotate freely within the slip ring base 26. The support pole 12 extends upwardly from the rotary element 28.

The windsock 14 has a conventional structure. It is formed from a tube of flexible, translucent material, such as nylon. The windsock 14 tapers so as to have a wider open end 30 and a narrower open end 32. The windsock 14 has alternating annular bands of white and orange colour arranged along its length. In the example shown, there are three white bands 34,36,38 and two orange bands 40,42. An interior annular surface 44 extends from the wider open end 30 to the narrower open end 32 and an exterior annular surface 46 also extends from the wider open end 30 to the narrower open end 32.

The wider open end 30 of the windsock 14 is connected to the support pole 12 by the connector 16. The connector 16 is fixed relative to the support pole 12 to prevent relative movement between the connector 16 and the pole 12. The connector 16 has a rigid circular support ring 48 which is secured around the wider open end 30 of the windsock 14 so as to hold the wider open end 30 in an open configuration.

As is well known, the rotary element 28, the support pole 12, the connector 16 and the windsock 14 rotate, or "weather vein", relative to the slip ring base 26 so that the windsock 14 always lies down-wind of the support pole 12.

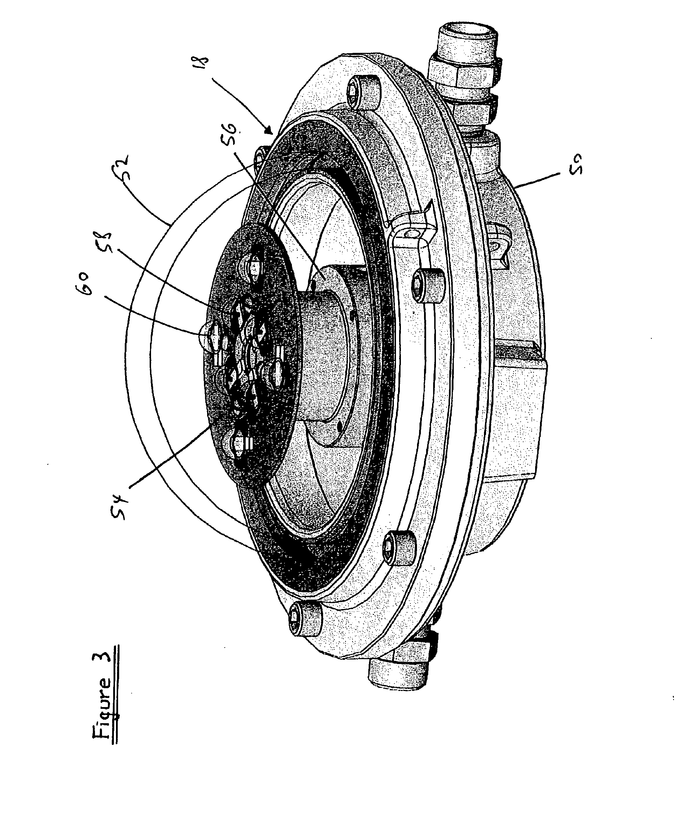

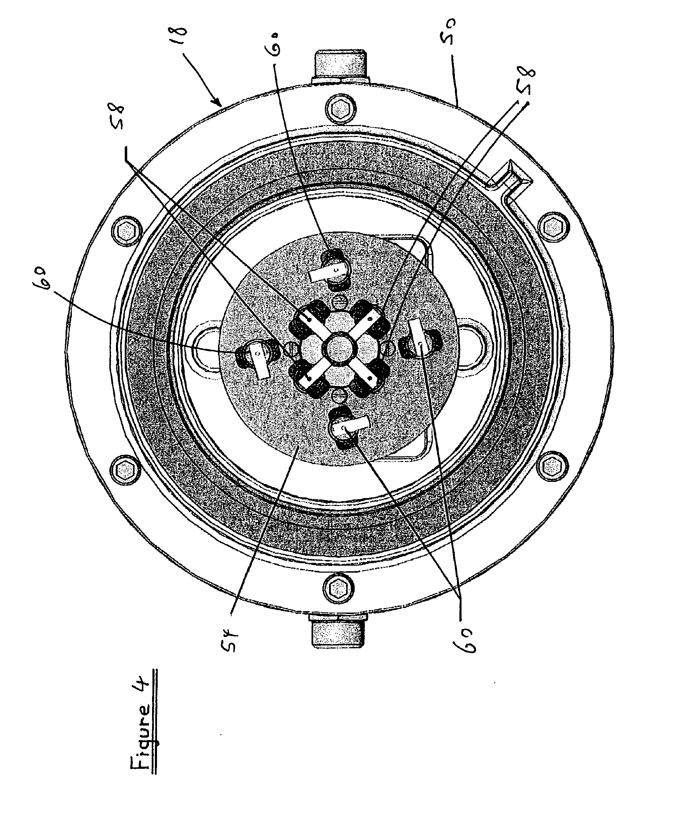

The first light source 18 is best seen in Figures 3 and 4. The light source 18 comprises an explosion and weatherproof casing having a metal base 50 and a generally hemispherical glass cover 52. Within the casing there is provided a metal mounting plate 54 which is connected to the metal base 50 by a heat sink 56.

On the metal mounting plate 54 are mounted four red/orange light emitting LEDs 58 and four white light emitting LEDs 60. As best seen in Figure 4, the red/orange light emitting LEDs 58 are arranged in an annular configuration. The white light emitting LEDs 60 are also arranged in an annular configuration, which is concentric with and radially outward of the annular configuration formed by the red/orange light emitting LEDs 58.

The red/orange light emitting LEDs 58 emit red/orange light - that is to say light consisting substantially of wavelengths in both the red and orange regions of the visible spectrum.

Each LED 58,60 emits its light in a respective conical beam which passes out of the hemispherical glass cover 52 and which has a cone axis lying perpendicular to the metal mounting plate 54. For each LED (whether red/orange light emitting or white light emitting) 58,60, the intensity of the emitted light diminishes as the angle from the cone axis increases so that the intensity diminishes to zero at approximately 45 degrees from the cone axis. Beyond 45 degrees, there is substantially no emission of light.

Turning back to Figures 1 and 2, the first light source 18 is mounted to the support pole 12 by a mounting plate 62 which is fixed to prevent relative movement between the mounting plate 62 and the support pole 12. The first light source 18 is positioned so that red/orange and white light emitted from the red/orange light emitting LEDs 58 and the white light emitting LEDs 60, respectively, is directed into the interior of the windsock 14 and onto the interior surface 44 of the windsock 14 along the whole length of the windsock. When the windsock 14 is held by the wind in the horizontal position shown in Figures 1 and 2, then the axes of the light beams emitted by the LEDs 58,60 lie parallel with the axis of the windsock 14.

Some of the white light that is emitted from the white light emitting LEDs 60 will fall on the white bands 34,36 and 38. A relatively high percentage of the white light falling on the white bands 34,36,38 is transmitted across the white bands 34,36,38 from the interior surface 44 to the exterior surface 46. In addition, some of the red/orange light emitted by the red/orange light emitting LEDs 58 will also fall on the white bands 34,36,38. A proportion of this light is also transmitted across the white bands 34,36,38 to the exterior surface 46. However, the overall impression that will be given to an observer looking at the illuminated windsock under low ambient light conditions is that the illuminated white bands 34,36,38 are white in colour.

Some of the white light emitted from the white light emitting LEDs 60 will fall on the orange bands 40,42. Only a small percentage of the white light falling on the orange bands 40,42 is transmitted across the orange bands 40,42 from the interior surface 44 to the exterior surface 46. This is because the white light contains only a small percentage of wavelengths falling within the orange and red portions of the visible spectrum. Other wavelengths tend to be absorbed by the orange bands 40,42. On the other hand, a relatively high percentage of the red/orange light that falls on the orange bands 40,42 is transmitted across the orange bands 40,42 from the interior surface 44 to the exterior surface 46. The overall impression to an observer observing the windsock 14 under low ambient light conditions is that the orange bands 40,42 are illuminated and orange in colour.

Hence, the percentage transmission of the red/orange light, that is emitted from the red/orange light emitting LEDs 58, over the orange bands 40,42, is greater than the percentage transmission across the orange bands 40,42 of the white light that is emitted from the white light emitting LEDs 60. In view of this, a significant advantage arises from the use of the red/orange light emitting LEDs 58.

There are known windsock assemblies which use only white light emitting LEDs to illuminate a windsock. However, as discussed above, the percentage transmission of white light across orange bands is relatively low. In view of this, in order to achieve sufficient illumination of the orange bands, it is necessary to use a relatively large number of white LEDs which, cumulatively, have a relatively high power consumption. In the exemplary embodiment of the current invention described above, each red/orange light emitting LED 58 has an individual power consumption which is similar to that of each white light emitting LED 60. However, because both red/orange and white light emitting LEDs 58,60 are used, and because the percentage transmission of red/orange light across the orange bands 40,42 is greater than the percentage transmission of white light across the orange bands 40,42, it is possible to use a lower total number of LEDs as compared to the number that would be required if only white light emitting LEDs were used. In addition, the cumulative power consumption of the red/orange and white LEDs 58,60 is lower than would be the case to achieve a similar degree of illumination of the orange bands 40,42 using white LEDs alone.

Because the overall power consumption and the number of LEDs are reduced, then the heat generated during operation is also reduced. This is advantageous as it is possible to use a smaller housing for the LEDs.

Additionally, it is often desirable to power the first light source 18 with a self-contained power source not reliant on mains power, such as a combination of a bank of batteries and a solar panel charging the batteries. In such circumstances, it is highly desirable to have a reduced power consumption as a consequent reduction in the cost of the power source can often be achieved.

The second light source 20 is not critical to the invention. This light source serves as a red obstruction light as required by some regulatory authorities.

It will be appreciated that various adaptations may be made to the exemplary embodiment described above without departing from the current invention.

For example, red/orange light emitting LEDs 58 are used in the above example because the red/orange light has a high percentage transmission across the orange bands 40,42. The emitted red/orange light is closely matched to the maximum wavelength transmissivity of the orange bands 40,42. In addition, red/orange light emitting LEDs are commercially available at an acceptable cost. Moreover, they exhibit a satisfactory efficiency in terms of light emitted per power consumption. However, LEDs that emit light of another, non-white colour may be used in place of the red/orange light emitting LEDs 58 so far as the light emitted by the LEDs has a greater percentage transmission across the orange bands 40,42 as compared to the white light emitted by the white light emitting LEDs 60.

The windsock 14 of the exemplary windsock assembly described above has bands which are white and orange in colour. Such windsocks are standard and prescribed by many regulatory authorities. However, it will be appreciated that the current invention can be applied to windsocks having different combinations of colour. For example, the current invention can be applied to windsocks which have white bands and bands of a colour other than orange. In this case, the red/orange light emitting LEDs 58 will be replaced by LEDs which emit light that has a percentage transmission across the coloured bands that is greater than the percentage transmission across the coloured bands of the white light that is emitted by the white light emitting LEDs 60.

The current invention could potentially be applied to windsocks which use two different non-white colours. In this case, the assembly may utilise a first type of LED which emits light that has a relatively high percentage transmission across windsock bands of a first non-white colour, and a second type of LED that emits light having a relatively high percentage transmission across windsock bands of a second non-white colour different from the first colour.

It is convenient to locate the first light source 18 at an open end 30 of the windsock 14 so that the light source 18 directs light into the interior of the windsock and onto the interior surface 44. However, the LEDs 58,60 might be positioned in any other suitable location which allows the LEDs 58,60 to direct light onto the interior surface 44 of the windsock 14.

The red/orange light emitting LEDs 58 and the white light emitting LEDs 60 need not be housed in the same housing 18. They could be, for example, housed in separate housings.

## Claims

1. A windsock assembly comprising: a windsock (14) having first and second portions (34,36,38,40,42), the first portion (34,36,38) having a first colour and the second portion (40,42) having a second non-white colour that is different from the first colour, the windsock (14) having interior and exterior surfaces (44, 46), each said surface extending over the first and second portions (34,36,36,40,42); and illumination means (18) for directing light onto the interior surface (44), light from the illumination means (18) being transmitted by the first and second portions to the exterior surface (46), the illumination means (18) comprising a least one first LED (60) and the first portion (34,36,38) transmitting light emitted by the or each first LED (60) to the exterior surface (46); **characterised in that** the illumination means (18) comprises at least one second LED (58) that emits non-white light of a different colour to the light of the or each first LED (60), the percentage transmission of the non-white light from the or each second LED (58) through the second portion (40,42) being greater than the percentage transmission through the second portion (40,42) of the light emitted by the or each first LED (60).

2. A windsock assembly according to claim 1, wherein the second portion (40,42) is orange and the or each second LED (58) emits red light or orange light or light which is substantially made up of both red and orange wavelengths.

3. A windsock assembly according to claim 1 or claim 2, wherein the first portion (34,36,38) is white and the or each first LED (60) emits white light.

4. A windsock assembly according to any preceding claim, wherein the or each first LED (60) and the or each second LED (58) are located at a first end (30) of the windsock (14) for emitting light through the interior of the windsock towards a second opposed end (32) of the windsock.

5. A windsock assembly according to any preceding claim, wherein the first and second LEDs (58,60) are mounted in a common housing (50,52).

6. A windsock assembly according to any preceding claim, wherein there are a plurality of first LEDs (60) arranged in a first annular configuration and there are a plurality of second LEDs (58) arranged in a second annular configuration which is co-axial with the first annular configuration.

7. A windsock assembly according to claim 6, wherein the second annular configuration lies radially within the first annular configuration.

8. A windsock assembly according to claim 4 or any claim dependent thereon, wherein each LED (58,60) emits light in a right circular conical beam, the beam having an axis which is directed parallel to an axis of the windsock (14) when the windsock is in a horizontal position.

9. A windsock assembly according to claim 8, wherein the conical beam of each LED has a periphery which is about 45° from the axis.

10. A windsock assembly according to claim 8 or claim 9, wherein the intensity of the illumination decreases from the axis to the periphery of the conical beam.

11. A windsock assembly according to any preceding claim, wherein there are a plurality of portions of the first colour (34,36,38) and a plurality of portions of the second colour (40,42), the portions of the first colour alternating with the portions of the second colour along the length of the windsock (14).
